(19) Europäisches Patentamt
European Patent Office
Office européen des brevets

(11) **EP 3 024 106 B1**

(12) **EUROPÄISCHE PATENTSCHRIFT**

(45) Veröffentlichungstag und Bekanntmachung des Hinweises auf die Patenterteilung:
**19.12.2018 Patentblatt 2018/51**

(51) Int Cl.:
*H02J 3/00* (2006.01)  *H02J 3/14* (2006.01)
*H02J 3/24* (2006.01)

(21) Anmeldenummer: **15182729.2**

(22) Anmeldetag: **27.08.2015**

(54) **ZUSCHALTVORRICHTUNG FÜR EINE ELEKTRISCHE ANLAGE ZUM ZEITVERZÖGERTEN ANFAHREN NACH EMPFANG EINES STEUERSIGNALS**

ACTIVATION DEVICE FOR AN ELECTRICAL INSTALLATION FOR TIME DELAYED STARTING AFTER RECEIPT OF A CONTROL SIGNAL

DISPOSITIF DE COMMUTATION POUR UNE INSTALLATION ELECTRIQUE DESTINEE AU DEMARRAGE TEMPORISE APRES LA RECEPTION D'UN SIGNAL DE COMMANDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.11.2014 DE 102014116873**

(43) Veröffentlichungstag der Anmeldung:
**25.05.2016 Patentblatt 2016/21**

(73) Patentinhaber: **innogy Netze Deutschland GmbH 45128 Essen (DE)**

(72) Erfinder:
• **HAMMERSCHMIDT, Torsten, Dr. 44267 Dortmund (DE)**
• **GAUL, Armin, Dr. 59379 Selm (DE)**

(74) Vertreter: **Cohausz & Florack Patent- & Rechtsanwälte Partnerschaftsgesellschaft mbB Bleichstraße 14 40211 Düsseldorf (DE)**

(56) Entgegenhaltungen:
**EP-A1- 2 899 828          WO-A1-2012/000538**
**WO-A1-2014/152934     DE-A1-102012 201 315**
**GB-A- 2 426 878**

**Beschreibung**

Die Erfindung betrifft eine Zuschaltvorrichtung für mindestens eine mit einem Stromversorgungsnetz elektrisch verbindbare Anlage umfassend mindestens einen Steuersignaleingang zum Empfangen eines Steuersignals von einer entfernt angeordneten zentralen Steuerung. Die Erfindung betrifft darüber hinaus eine elektrische Anlage, ein System und ein Verfahren.

Bestehende Stromversorgungssysteme sind ursprünglich für einen so genannten Lastfolgebetrieb konzipiert worden. Unter einem Lastfolgebetrieb ist zu verstehen, dass elektrische Verbraucher insbesondere in Abhängigkeit von Kundenwünschen jederzeit mit dem Stromversorgungsnetz verbunden werden konnten, um eine beliebige Energiemenge zu entnehmen. Voraussetzung hierbei ist lediglich, dass die maximal bezogene Leistung vorgegebene Grenzwerte nicht überschreitet, welche in der Regel durch die Auslegung des Netzanschlusses und der darin enthaltenden Sicherungen festgelegt sind. Durch diese Maßnahmen zusammen mit den zur Stromerzeugung genutzten konventionellen Kraftwerken konnte in der Vergangenheit das Stromversorgungsnetz mit einer ausreichenden Stabilität und Sicherheit betrieben werden.

In der heutigen Zeit werden in den Stromversorgungssystemen die konventionellen Kraftwerke vermehrt durch Kraftwerke, die regenerative Quellen zur Stromerzeugung nutzen, abgelöst. Beispielhaft seien hier Windkraftanlagen und Photovoltaikanlagen genannt. Derartige Kraftwerke weisen den Nachteil auf, dass die Stromerzeugung volatil ist. Dies führt dazu, dass zu bestimmten Zeiten, beispielsweise im Sommer in der Mittagszeit, ein hohes Stromangebot vorliegt, während zu anderen Zeiten, wenn z.B. keine Sonne scheint und/oder es windstill ist, das Stromangebot gering ist. Die steigende Anzahl dieser Kraftwerke bringt daher Stabilitätsprobleme als auch stark schwankende Strompreise aufgrund der unterschiedlichen Angebotslage mit sich.

Wirtschaftliche Überlegungen haben zu einer zumindest teilweisen Abkehr vom Lastfolgenbetrieb geführt. So können elektrische Lasten, wie Kühl- oder Wärmeanlagen, aufgrund einer übergeordneten Entscheidung, beispielsweise von einem Netzbetreiber, vom Stromversorgungsnetz getrennt, also abgeschaltet, oder an das Stromversorgungsnetz angeschlossen, also zugeschaltet, werden. Unter einer übergeordneten Entscheidung ist insbesondere eine Entscheidung gemeint, die von dem Kunden, also dem Besitzer der elektrischen Last, nicht (direkt) beeinflusst werden kann. Beispielsweise kann ein Steuersignal, wie ein Broadcastsignal, von einer zentralen Steuerung eines Netzbetreibers, an eine Vielzahl von elektrischen Lasten gesendet werden, um die elektrischen Lasten zu zuschalten, wenn das Stromangebot hoch und der Strompreis insbesondere niedrig ist.

Eine zentral ausgelöste gleichzeitige Zuschaltung von mehreren Lasten in insbesondere einem räumlich begrenzten Gebiet kann jedoch zu Stabilitäts-, Überlastungs- bzw. Spannungsproblemen führen. Das nahezu gleichzeitige Zuschalten der vertikalen Netzlast in einem Stromversorgungsnetz bzw. Verteilnetz (Erzeugern/Lasten) kann bewirken, dass der systemkritische, also zulässige, Leistungsgradient der Regelzone(n), wie einem Subnetz eines Stromversorgungsnetzes, überschritten wird. Dies kann den Zusammenbruch des Stromversorgungsnetzes, also einen Schwarzfall, zur Folge haben. Grund hierfür ist insbesondere, dass sich aufgrund der hohen Flankensteilheit der schlagartig fluktuierenden Leistung die Netzfrequenz (steigende Netzfrequenz bei Überspeisung/Unterlast, sinkende Frequenz bei Unterspeisung/Überlast) nahezu unmittelbar ändern kann. Dies führt dazu, dass mindestens eine Ausschaltbedingung, insbesondere das Erreichen von mindestens einem vorgeschriebenen Schwellwert bzw. Kriterium, wie ein bestimmter Spannungsgrenzwert oder Frequenzgrenzwert, von den Verbrauchern und/oder Erzeugern detektiert wird und daher diese elektrischen Anlagen sich nahezu unmittelbar und gleichzeitig ausschalten bzw. deaktivieren. Die Folge wäre ein Schwarzfall.

Es ist daher die Aufgabe der vorliegenden Erfindung, eine Zuschaltvorrichtung für eine elektrische Anlage zur Verfügung zu stellen, welche Stabilitäts-, Überlastungs- bzw. Spannungsprobleme und insbesondere das Risiko eines Schwarzfalls eines Stromversorgungsnetzes zumindest reduziert.

Diese Aufgabe wird gemäß einem ersten Aspekt der Erfindung bei einer Zuschaltvorrichtung für mindestens eine mit einem Stromversorgungsnetz elektrisch verbindbare Anlage gemäß dem Patentanspruch 1 gelöst. Die Zuschaltvorrichtung umfasst mindestens einen Steuersignaleingang zum Empfangen eines Steuersignals von einer entfernt angeordneten zentralen Steuerung. Das Steuersignal ist ein Zuschaltbefehl. Die Zuschaltvorrichtung umfasst mindestens eine Zuschaltverzögerungseinrichtung eingerichtet zum Bestimmen einer Zuschaltverzögerungszeitspanne. Die Zuschaltverzögerungszeitspanne ist eine zufallsbedingt und anlagenindividuelle Zeitspanne. Die Zuschaltvorrichtung ist eingerichtet, ein Herstellen einer elektrisch leitenden Verbindung zwischen der Anlage und dem Stromversorgungsnetz bei Empfang des Zuschaltbefehls erst nach Ablauf der bestimmten Zuschaltverzögerungszeitspanne zu bewirken.

Indem im Gegensatz zum Stand der Technik eine Zuschaltvorrichtung vorgesehen ist, die bei Empfang eines Zuschaltbefehls den tatsächlichen Zuschaltzeitpunkt einer ihr zugeordneten Anlage um eine zufällige Zeitspanne verzögert, kann ein gleichzeitiges und unmittelbares Zuschalten einer Vielzahl elektrischer Anlagen in dem Stromversorgungsnetz und die damit einhergehenden Stabilitäts-, Überlastungs- bzw. Spannungsprobleme verhindert werden. Insbesondere kann die Gefahr eines Schwarzfalls reduziert werden.

Die Zuschaltvorrichtung, beispielsweise ein Hardware- und/oder Softwaremodul, kann in einer elektrischen Anlage integriert sein und/oder an dieser angeschlossen bzw. mit dieser assoziiert sein. Beispielsweise kann die Zuschaltvorrichtung als Steuerbox zwischen einem Smart Meter Gateway und einer elektrischen Anlage realisiert sein.

Die Anlage kann ein Einspeiser und/oder eine Last sein. Die Anlage, wie ein elektrischer Verbraucher und/oder ein elektrischer Energieerzeuger, ist an ein Stromversorgungsnetz anschließbar. Eine elektrische Anlage kann insbesondere eine Schaltereinrichtung umfassen, um elektrisch mit dem Stromversorgungsnetz verbunden bzw. getrennt zu werden. Ein Stromversorgungsnetz umfasst vorliegend mindestens ein Ortsnetz (Niederspannungsnetz), Mittelspannungsnetz und/oder Hochspannungsnetz. Das Stromversorgungsnetz kann insbesondere Leitungen, Transformatoren, Einspeiser und Lastenumfassen.

Die Zuschaltvorrichtung weist einen Steuersignaleingang auf. Der Steuersignaleingang ist dazu eingerichtet, ein Steuersignal, insbesondere ein Datensignal, zu empfangen. Bei dem Datensignal kann es sich um einen Zuschaltbefehl handeln. Ein Zuschaltbefehl wird von einer zentralen Steuerung ausgesandt, um nach einer vorherigen Trennung der elektrischen Anlage von dem Stromversorgungsnetz eine (erneute) Zuschaltung zu dem Stromversorgungsnetz zu bewirken. Die zentrale Steuerung kann zum Beispiel eine entfernt angeordnete Steuerung, wie eine Servereinrichtung, sein, die über ein drahtloses und/oder drahtgebundenes Kommunikationsnetz mit der Zuschaltvorrichtung verbunden ist. Die Anlage kann beispielsweise an das Kommunikationsnetz angeschlossen sein und die Zuschaltvorrichtung in der Anlage integriert sein. In einem weiteren Beispiel kann die zentrale Steuerung eine lokale Steuerung, wie eine Hausautomationssteuerung, sein.

Unter einem Steuersignal, wie einem Datensignal, ist vorliegend nicht ein Netzparameter des Stromversorgungsnetzes, wie die Netzspannung, die Netzfrequenz oder der Netzstrom des Stromversorgungsnetzes, zu verstehen. Zwar kann das Steuersignal abhängig von einem Netzparameter gebildet werden, jedoch ist das Steuersignal nicht der Netzparameter.

Es ist zunächst erkannt worden, dass die nahezu gleichzeitige Zuschaltung von elektrischen Anlagen zu einem Stromversorgungsnetz zu einer Überschreitung des systemkritischen, also noch zulässigen, Leistungsgradienten führen kann. Besonders problematisch ist es, wenn sich die Anlagen in einem räumlich begrenzten Gebiet, wie einem gemeinsamen Ortsnetz, Mittelspannungsnetz, oder benachbarten Orts- oder Mittelspannungsnetzen, befinden. Ursache der gleichzeitigen Zuschaltung ist ein entsprechender Zuschaltbefehl einer zentralen Steuerung.

Um diese Probleme zumindest zu reduzieren, wird einer elektrischen Anlage eine Zuschaltvorrichtung zugeordnet sein. Die Zuschaltvorrichtung weist eine Zuschaltverzögerungseinrichtung auf, die für die zugeordnete elektrische Anlage eine zufallsbedingte Zuschaltverzögerungszeitspanne bestimmt. Vorzugsweise kann die Bestimmung der Zuschaltverzögerungszeitspanne (stets) nach Empfang bzw. Detektion eines Zuschaltbefehls durchgeführt werden. Es versteht sich, dass die Bestimmung auch zu einem vorherigen Zeitpunkt erfolgen kann.

Die Zuschaltvorrichtung ist dazu eingerichtet, bei bzw. nach dem Empfang bzw. Detektion des Zuschaltbefehls die Zuschaltung der zugeordneten Anlage bis zum Ablauf der zuvor bestimmten Zuschaltverzögerungszeitspanne zu verzögern. Erst nach Ablauf der Zuschaltverzögerungszeitspanne wird die Zuschaltung der Anlage von der Zuschaltvorrichtung freigegeben.

Beispielsweise kann die Zuschaltvorrichtung ein Aktivierungssignal generieren und zur Freigabe an die Anlage senden. Es kann auch eine direkte Schaltung bzw. Aktivierung der elektrischen Anlage bewirkt werden. So kann die Umsetzung über ein Relais oder einen (direkten) Steuerimpuls, also insbesondere durch eine direkte Schaltung, erfolgen. Ein Aktivierungssignal kann dazu eingerichtet sein, ein Aktivieren bzw. Einschalten der elektrischen Anlage freizugeben. Insbesondere kann eine Schalteinrichtung der elektrischen Anlage angesteuert werden. Ein Schalter der Schalteinrichtung kann (nur) nach Erhalt des Aktivierungssignals geschlossen werden, so dass eine elektrische Kopplung zwischen der elektrischen Anlage und dem Stromversorgungsnetz hergestellt werden kann. Dann kann die elektrische Anlage in herkömmlicher Weise, jedoch zeitversetzt, angefahren werden.

Durch die erfindungsgemäße Zuschaltvorrichtung wird verhindert, dass sich eine Vielzahl von elektrischen Anlagen (nahezu) gleichzeitig aufgrund eines Steuersignals von einer zentralen Steuerung einschalten. Jede elektrische Anlage umfassend die Zuschaltvorrichtung schaltet (frühestens) nach dem Ablauf einer zufälligen Zeitspanne ein. Hierdurch kann verhindert werden, dass die vertikale Netzlast den systemkritischen, also zulässigen, Leistungsgradienten der Regelzone(n), wie dem Stromversorgungsnetz, übersteigt. Die Flankensteilheit kann verringert werden. Gemäß einer ersten Ausführungsform der erfindungsgemäßen Zuschaltvorrichtung kann die Zuschaltverzögerungseinrichtung eingerichtet sein, die Zuschaltverzögerungszeitspanne in Abhängigkeit einer (eindeutigen) Identifikationskennung der Anlage zu bestimmen. Die Zuschaltvorrichtung kann insbesondere eingerichtet sein, eine anlagenindividuelle Zuschaltverzögerungszeitspanne zu bestimmen. Beispielsweise kann für die Berechnung der Zuschaltverzögerungszeitspanne eine Seriennummer der elektrischen Anlage als Ausgangspunkt herangezogen werden. Da zumindest gleichartige Anlagen in der Regel unterschiedliche Seriennummern haben, kann durch die Heranziehung einer entsprechenden Identifikationskennung die Wahrscheinlichkeit erhöht werden, dass sich die für verschiedene Anlagen bestimmten Zuschaltverzögerungszeitspannen voneinander unterscheiden. Mit anderen Worten kann die Wahrscheinlichkeit erhöht werden, dass eine Vielzahl an Anlagen, die gleichzeitig ein Steuersignal empfangen, zu unterschiedlichen Zeiten zugeschaltet werden.

Es wird zusätzlich auf das Dokument WO 2012/000538 A1 hingewiesen welches auch eine Vorrichtung zum netzlastabhängigen Einschalten von Endgeräten beschreibt. Ein derartiges elektrisches Gerät weist eine Überwachungseinrichtung auf, die die Netzspannung und/oder die Netzfrequenz überwacht und abhängig von den aktuellen Werten ein Einschaltsignal erzeugt. Dokument WO 2012/000538 A1 offenbart keine Zuschaltvorrichtung umfassend mindestens einen Steuersignaleingang zum Empfangen eines Steuersignals von einer entfernt angeordneten zentralen Steuerung, wobei eine zufallsbedingte und anlagenindividuelle Zuschaltverzögerungszeitspanne bestimmt wird.

Die Zuschaltverzögerungszeitspanne kann beispielsweise durch einen (konventionellen) Zufallsgenerator bestimmt werden, welcher vorzugsweise in einem vorgebbaren Zeitbereich eine Zufallszeit generiert. Gemäß einer weiteren Ausführungsform kann die Zuschaltverzögerungseinrichtung eingerichtet sein, die Zuschaltverzögerungszeitspanne in Abhängigkeit von mindestens einem Parameter ausgewählt aus der Gruppe umfassend:

- Identifikationskennung der Anlage
- Nennleistung der Anlage,
- regelbare Anlage oder nicht regelbare Anlage,
- historische Daten der Anlage,
- mindestens ein lokal erfasster Netzparameter des Stromversorgungsnetzes,
- lokale Zeit,
- lokale Temperatur,
- Zeitdauer der Abschaltung der Anlage,
- Zeitpunkt der Abschaltung der Anlage,

zu bestimmen. Indem die Eigenschaften der elektrischen Anlage, physikalische Parameter und/oder Umgebungsparameter bei der Bestimmung der Zuschaltverzögerungszeitspanne berücksichtigt werden, kann ein noch stabilerer und sicherer Betrieb einer Anlage und des Stromversorgungsnetzes erreicht werden.

Beispielsweise kann mindestens einer der Parameter in einer Bestimmungsregel bzw. Rechenregel abgebildet werden, die in der Zuschaltvorrichtung implementiert sein kann. Die Regel kann beispielsweise direkt zur Bestimmung der zufälligen Zuschaltverzögerungszeitspanne genutzt werden. Vorzugsweise kann die Zuschaltverzögerungszeitspanne in Abhängigkeit von mindestens einem der oben genannten Parameter mittels eines Zustandsautomaten, eines Petri-Netzes, einer erweiterten ereignisgesteuerten Prozesskette (eEPK), eines durch einen Algorithmus umgesetztes Flussdiagramm und/oder dergleichen bestimmt/berechnet werden.

Es ist erkannt worden, dass ein Kriterium für ein frühzeitiges oder spätes Anfahren einer elektrischen Anlage nach Erhalt eines Zuschaltbefehls sein kann, ob es sich um eine regelbare oder nicht regelbare Netzlast handelt. Darunter ist zu verstehen, ob, beispielsweise mittels der Zuschaltvorrichtung, die dem Stromversorgungsnetz zuschaltbare Netzlast regelbar ist. Ist eine Netzlast beispielsweise nur pauschal zuschaltbar, dann kann grundsätzlich die Zuschaltung eher später als bei einer regelbaren Netzlast erfolgen. Eine regelbare Netzlast besitzt den Vorteil, dass sie zum Stabilisieren des Stromversorgungsnetzes (aktiv) genutzt werden kann. Entsprechend kann eine Regel implementiert sein, dass eine regelbare Netzlast zumindest im Durchschnitt vor einer nicht regelbaren Netzlast aktiviert wird.

Zudem kann die Art der Netzlast berücksichtigt werden. Auch hier kann es sich als vorteilhaft erweisen, bestimmte Arten von Netzlasten vor anderen Arten hinzuschalten und entsprechende Regeln zu implementieren. Beispielsweise kann bestimmt werden, ob aktuell ein Bedarf an Blindleistung besteht oder nicht. Insbesondere kann der Phasenwinkel zwischen Netzspannung und Netzstrom ausgewertet werden.

Auch die Höhe der Nennleistung der Netzlast der elektrischen Anlage kann als Parameter berücksichtigt werden. Beispielhaft kann eine Regel implementiert werden, wonach elektrische Anlagen mit einer Netzlast in einem ersten Bereich vorteilhafter Weise im Durchschnitt vor elektrischen Anlagen mit einer Netzlast in einem zweiten Bereich, beispielsweise einem höheren Bereich, aktiviert werden.

Weitere Kriterien, die die Bestimmung der Zuschaltverzögerungszeitspanne beeinflussen können, sind historische Daten. Wenn aus den historischen Daten beispielsweise hervorgeht, dass in den letzten Tagen die elektrische Anlage nur eine geringe Strommenge erzeugt/verbraucht hat, kann gefolgert werden, dass dies auch zum Zeitpunkt des Empfangs des Steuersignals der Fall ist. Entsprechende Regeln können implementiert werden. Auch kann mindestens ein lokal erfasster Netzparameter berücksichtigt werden. Zudem kann auch die Dauer der Abschaltung einer elektrischen Anlage Berücksichtigung finden.

Vorzugsweise können die vorgenannten Parameter priorisiert werden, wobei die Priorisierung von den tatsächlichen Werten der einzelnen Parameter abhängen kann. Grundsätzlich kann die Zuschaltverzögerungszeitspanne beliebig sein. Insbesondere kann die zufallsbedingte Zuschaltverzögerungszeitspanne innerhalb eines vorgegebenen Zeitbereichs liegen. Der Zeitbereich wird durch eine untere Grenze und eine obere Grenze definiert (z.B. zwischen 0 Minuten und der maximalen Zuschaltverzögerungszeitspanne, wie 10 Minuten). In einem bevorzugten Ausführungsbeispiel kann die Zuschaltverzögerungszeitspanne innerhalb eines Zeitbereichs liegen und die Zuschaltverzögerungseinrichtung eingerichtet sein, den Zeitbereich zu bestimmen. Vorzugsweise kann die Bestimmung des Zeitbereichs (stets) nach Empfang bzw. Detektion eines Zuschaltbefehls durchgeführt werden. Aktuelle lokale Netzparameter und/oder Umgebungsparameter können dann in die Bestimmung einfließen. Es versteht sich, dass die Bestimmung auch zu einem vorherigen Zeitpunkt erfolgen kann. Indem nicht nur die Zuschaltverzögerungszeitspanne in einem Zeitbereich zufallsbedingt ist, sondern sich auch der Zeitbereich verschiedener Anlagen unterscheiden kann, kann die Wahrscheinlichkeit noch weiter erhöht werden, dass ursprünglich gleichzeitig zuzuschaltende Anlagen zweitversetzt zugeschaltet werden.

Der Zeitbereich kann insbesondere in Abhängigkeit von physikalischen Größen bestimmt werden. Gemäß einer Ausführungsform kann die Zuschaltverzögerungseinrichtung eingerichtet sein, den Zeitbereich in Abhängigkeit von mindestens einem Parameter ausgewählt aus der Gruppe umfassend:

- Identifikationskennung der Anlage,
- Nennleistung der Anlage,
- regelbare Anlage oder nicht regelbare Anlage,
- historische Daten der Anlage,
- mindestens ein lokal erfasster Netzparameter des Stromversorgungsnetzes,
- lokale Zeit,
- lokale Temperatur,
- Zeitdauer der Abschaltung der Anlage,
- Zeitpunkt der Abschaltung der Anlage,

zu bestimmen. Die genannten Parameter können bei der Bestimmung des Zeitbereichs in ähnlicher Weise wie oben beschrieben verwendet werden. Insbesondere können die Grenzwerte des Zeitbereichs durch die genannten Parameter beeinflusst werden. Entsprechende Bestimmungs- bzw. Rechenregeln können in der Zuschaltvorrichtung hinterlegt sein.

In einer besonders bevorzugten Ausführungsform kann die Zuschaltverzögerungseinrichtung eingerichtet sein, einen gemessenen Netzparameter mit einem vorgegebenen Netzparameter zu vergleichen. Die Zuschaltverzögerungseinrichtung kann eingerichtet sein, in Abhängigkeit des Vergleichsergebnisses den Zeitbereich zu bestimmen. Beispielsweise kann ein Standartwert für den Zeitbereich vorgegeben sein. Dieser Standartwert kann je nach dem aktuellen Zustand des Stromversorgungsnetzes geändert werden. Die Änderung des Standartwertes des Zeitbereichs kann insbesondere von dem Vergleichsergebnis abhängen. Beispielsweise kann eine die Änderung des Standartwertes proportional zum bestimmten Abstand zwischen dem gemessenen Netzparameter und dem vorgegebenen Netzparameter sein. Bei dem vorgegebenen Netzparameter kann es sich beispielsweise um einen optimalen Netzparameter handeln.

Durch eine Erfassungseinrichtung kann ein Netzparameter, wie die Netzfrequenz oder die Netzspannung erfasst, insbesondere gemessen, werden. Als Rechenregel für die Bestimmung des Zeitbereichs kann in der Zuschaltvorrichtung hinterlegt sein, dass je geringer die gemessene Netzfrequenz und/oder die gemessene Netzspannung ist/sind, desto größer der Zeitbereich gewählt wird.

Wie zuvor beschrieben wurde, kann in der Zuschaltvorrichtung, beispielsweise in einer Speichereinrichtung der Zuschaltvorrichtung, mindestens eine Bestimmungsregel in Form eines Algorithmus implementiert sein. Durch eine Abarbeitung dieser mindestens einen Regel kann dann der minimale und/oder der maximale Zeitgrenzwert des Zeitbereichs für jede einzelne elektrische Anlage festgelegt werden. Dann kann eine zufällige Zuschaltverzögerungszeitspanne in dem Zeitbereich bestimmt werden.

Es versteht sich, dass die beiden Teilschritte, Bestimmung des Zeitbereichs und Bestimmung der Zuschaltverzögerungszeitspanne, auch in einer Bestimmungsregel oder in einer Mehrzahl an Bestimmungsregeln umgesetzt sein kann.

Ein weiterer Aspekt der Erfindung ist eine elektrische Anlage umfassend eine zuvor beschriebene Zuschaltvorrichtung. Die Zuschaltvorrichtung kann insbesondere in der elektrischen Anlage selbst integriert sein. Beispielsweise kann ein Hardware- und/oder Softwaremodul, wie ein Softwareagent, in der elektrischen Anlage implementiert sein. Auch ist es vorstellbar, dass die Zuschaltvorrichtung zwischen dem Stromversorgungsnetz, wie einer Energieleitung, und der elektrischen Anlage geschaltet ist. Beispielhafte und nicht abschließende elektrische Anlagen sind Windkraftanlagen, Photovoltaikanlagen, Wärmekopplungsanlagen, Waschmaschine, Kühlschränke, Wärmeanlagen, Hausautomationssteuervorrichtungen, Serveranlagen, Ladestationen für Elektrofahrzeuge, Elektrofahrzeuge, Klimaanlagen, Wärmepumpen, Nachtspeicherheizungen, Batterien im Haushalt, elektrisch beheizbare Pufferspeicher. etc. Letztere können beispielsweise auch dann elektrisch beheizt werden, wenn sie neben einer konventionellen Erwärmung über Gas, Öl oder Kohle zusätzlichen einen Elektroheizstab umfassen.

In einer Ausführungsform der erfindungsgemäßen elektrischen Anlage kann die elektrische Anlage ein systemimmanenter Verbraucher sein. Ein systemimmanenter Verbraucher ist ein Verbraucher, bei dem eine Verzögerung der Zuschaltung (nahezu) keinen Komfortverlust für den Kunden bedeutet. Während bei der Beleuchtung ein Benutzer beispielsweise erwartet, dass nach Betätigung eines Schalters die Beleuchtung unmittelbar aktiviert wird, kommt es bei systemimmanenten Verbrauchern, wie Kühl- oder Wärmeanlagen, Elektromobilen, automatisch betriebenen Rollläden, etc., nicht auf den exakten Zeitpunkt der Aktivierung an. Es versteht sich, dass bestimmte Grenzwerte existieren können, nach denen auch systemimmanente Verbraucher spätestens wieder aktiviert werden müssen.

Ein weiterer Aspekt der vorliegenden Erfindung ist ein System gemäß Patentanspruch 8. Das System umfasst mindestens eine mit einem Stromversorgungsnetz elektrisch verbindbare Anlage. Das System umfasst mindestens eine der Anlage zugeordnete zuvor beschriebene Zuschaltvorrichtung. Das System umfasst mindestens eine mit der Zuschaltvorrichtung über eine Kommunikationsverbindung verbundene zentrale Steuerung. Vorzugsweise kann das System eine Vielzahl elektrischer Anlagen mit entsprechend zugeordneten Zuschaltvorrichtungen umfassen.

Gemäß einer bevorzugten Ausführungsform des erfindungsgemäßen Systems kann die zentrale Steuerung zumindest Teil einer Hausautomationssteuerung sein. Die Hausautomationssteuerung kann die Zuschaltvorrichtung umfassen. Es ist erkannt worden, dass bei Hausautomationssystemen das Problem auftreten kann, dass bestimmte Verbraucher abhängig von einem Ereignis zugeschaltet werden, welches zumindest für eine Vielzahl von Hausautomationssystemen zur gleichen Zeit auftritt. Das Ereignis führt dann dazu, dass jede Steuerung eines Hausautomationssystems ein Steuersignal, insbesondere einen Zuschaltbefehl, für einen oder mehrere bestimmte Verbraucher generiert und aussendet. Das Steuersignal wird ereignisbasiert übermittelt. Ein Beispiel eines Ereignisses ist der Sonnenuntergang oder Sonnenaufgang bzw. dessen Zeitpunkt. In Folge von diesem Ereignis kann jede Hausautomationssteuerung beispielsweise die Rollläden ansteuern und aktivieren. Dies kann lokal zu Stabilitätsproblemen im Stromversorgungsnetz führen, wenn sich eine Vielzahl von Hausautomationssystemen in diesem lokalen Gebiet, wie einem Ortsnetz, befinden. Indem erfindungsgemäß das Hausautomationssystem mit mindestens einer Zuschaltvorrichtung ausgestattet ist, kann erreicht werden, dass bestimmte Verbraucher zeitversetzt aktiviert werden.

Ein weiterer Aspekt der Erfindung ist ein Verfahren zum elektrischen Verbinden einer Anlage mit einem Stromversorgungsnetz gemäß dem Patentanspruch 10. Das Verfahren umfasst die Schritte:

- Empfangen eines Steuersignals von einer entfernt angeordneten zentralen Steuerung, wobei das Steuersignal ein Zuschaltbefehl ist,

  - Bestimmen einer Zuschaltverzögerungszeitspanne, wobei die Zuschaltverzögerungszeitspanne eine zufallsbedingte und Anlagenindividuelle Zeitspanne ist, und
  - bei Empfang des Zuschaltbefehls, Herstellen einer elektrisch leitenden Verbindung zwischen der Anlage und dem Stromversorgungsnetz erst nach Ablauf der Zuschaltverzögerungszeitspanne.

Das Verfahren kann insbesondere zum Betreiben der zuvor beschriebenen Zuschaltvorrichtung und/oder elektrischen Anlage und/oder System verwendet werden. Gemäß dem Verfahren kann bei Empfang des Zuschaltbefehls eine elektrisch leitende Verbindung zur Ermöglichung eines Stromflusses zwischen der Anlage und dem Stromversorgungsnetz erst nach Ablauf der Zuschaltverzögerungszeitspanne hergestellt werden.

Ein noch weiterer Aspekt der Erfindung ist ein Computerprogramm mit Instruktionen ausführbar auf einem Prozessor derart, dass ein elektrischer Verbraucher gemäß dem zuvor beschriebenen Verfahren nach Empfang eines Zuschaltbefehls zu dem Stromversorgungsnetz zugeschaltet wird.

Die Merkmale der Verfahren und Vorrichtungen sind frei miteinander kombinierbar. Insbesondere können Merkmale der Beschreibung und/oder der abhängigen Patentansprüche, auch unter vollständiger oder teilweiser Umgehung von Merkmalen der unabhängigen Patentansprüche, in Alleinstellung oder frei miteinander kombiniert eigenständig erfinderisch sein.

Es gibt nun eine Vielzahl von Möglichkeiten, die erfindungsgemäße Zuschaltvorrichtung, die erfindungsgemäße Anlage, das erfindungsgemäße System, das erfindungsgemäße Verfahren und das erfindungsgemäße Computerprogramm auszugestalten und weiterzuentwickeln. Hierzu sei einerseits verwiesen auf die den unabhängigen Patentansprüchen nachgeordneten Patentansprüche, andererseits auf die Beschreibung von Ausführungsbeispielen in Verbindung mit der Zeichnung. In der Zeichnung zeigt:

Fig. 1     eine schematische Ansicht eines Ausführungsbeispiels eines Systems gemäß der vorliegenden Erfindung;

Fig. 2     eine schematische Ansicht eines weiteren Ausführungsbeispiels eines Systems gemäß der vorliegenden Erfindung;

Fig. 3     eine schematische Ansicht eines Ausführungsbeispiels einer Zuschaltvorrichtung gemäß der vorliegenden Erfindung; und

Fig. 4     ein schematisches Diagramm eines Ausführungsbeispiels eines Verfahrens gemäß der vorliegenden Erfindung.

In den Figuren werden für gleiche Elemente gleiche Bezugszeichen verwendet.

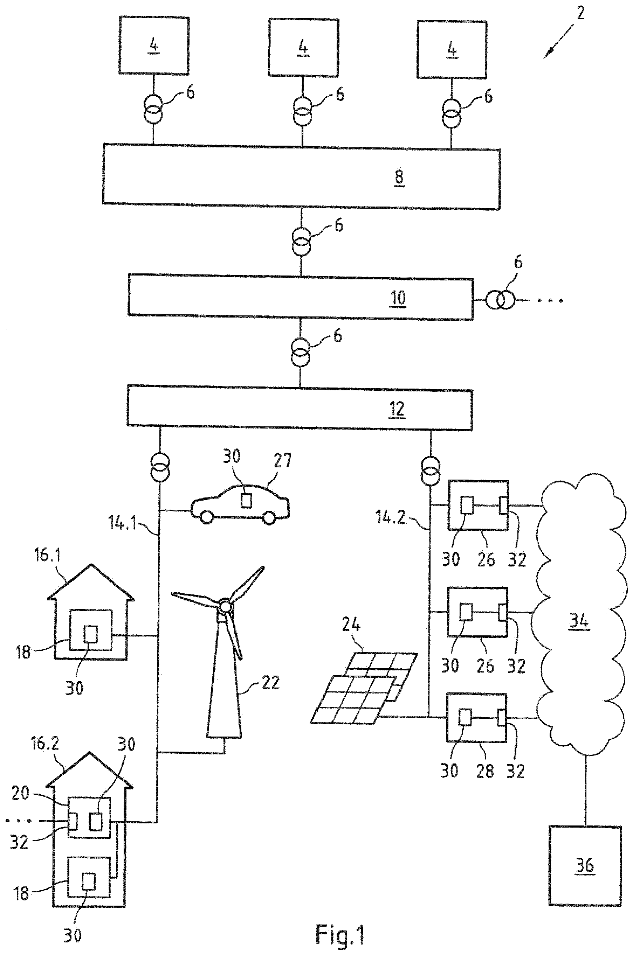

Figur 1 zeigt ein beispielhaftes System 2 gemäß der vorliegenden Erfindung. Insbesondere zeigt die Figur 1 ein beispielhaftes Gesamtsystem 2 mit einem Stromversorgungsnetz 8, 10, 12, 14.1, 14.2. Das vorliegende System 2 umfasst herkömmliche, zentrale Kraftwerke 4, wie Kohlekraftwerke, Kernkraftwerke und Wasserkraftwerke. Die Kraftwerke 4 sind über geeignete transformatorische Anlagen 6 an ein Höchstspannungsnetz 8 (meist 220 kV oder 380kV) angeschlossen.

Das Höchstspannungsnetz 8 ist ferner über einen geeigneten Umrichter 6 mit einem Hochspannungsnetz 10 (meist 110 kV) verbunden. An das Hochspannungsnetz 10 ist über einen weiteren Umrichter ein Mittelspannungsnetz 12 (1 kV - 50 kV) angeschlossen. Es versteht sich, dass weitere Mittelspannungsnetze 12 ebenso wie weitere (industrielle) Kraftwerke, industrielle Abnehmer, die Bahn, etc., an dem Hochspannungsnetz 10 angeschlossen sein können.

Darüber hinaus sind beispielhaft zwei Orts- bzw. Stadtnetze 14.1 und 14.2 über einen weiteren Umrichter 6 an das Mittelspannungsnetz 12 angeschlossen. Bei den Orts- bzw. Stadtnetzen 14.1 und 14.2 handelt es sich insbesondere um Niederspannungsnetze 14.1 und 14.2 (400/230 V). Die verschiedenen Spannungsnetze bilden vorliegend das Stromversorgungsnetz.

Das erste beispielhafte Ortsnetz 14.1 umfasst eine Mehrzahl von Gebäuden 16.1, 16.2, die jeweils einen zentralen Stromeingang aufweisen. Innerhalb der Gebäude 16.1, 16.2 kann sich grundsätzlich eine Vielzahl von elektrischen Verbrauchern, wie Kühlschränke, Waschmaschinen, etc., befinden.

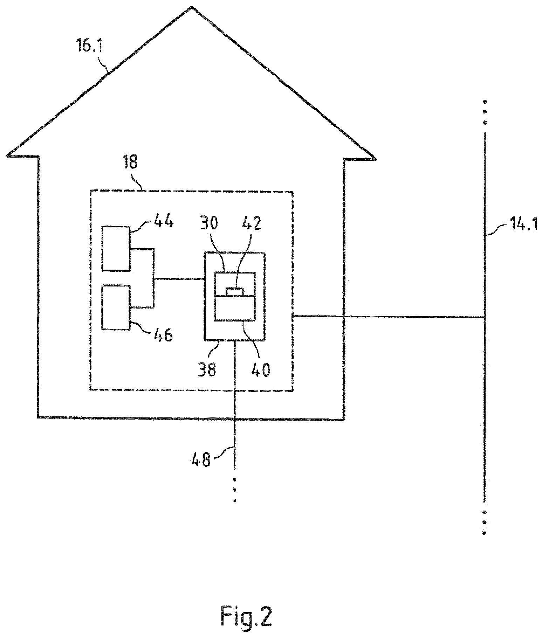

Vorliegend weisen die Gebäude 16.1,16.2 jeweils ein Hausautomationssystem 18 auf, welches mittels Figur 2 nachfolgend näher beschrieben werden wird. Das zweite Gebäude 16.2 umfasst neben dem Hausautomationssystem 18 zusätzlich als elektrische Anlage 20 beispielhaft eine Kraftwärmekopplungseinheit 20. Die Kraftwärmekopplungseinheit 20 wird mit einem geeigneten Brennstoff, wie Erdgas, Erdöl, Biogas, Klärgas, Deponiegas, Pflanzenöl, Holz, Pellets, etc., betrieben und ist eingerichtet, elektrische und thermische Energie zu erzeugen. Hierbei kann elektrische Energie auch ins Ortsnetz 14.1 gespeist werden.

Zudem ist an dem Ortsnetz 14.1 bzw. Niederspannungsnetz 14.1 ein Elektrofahrzeug 27 anschließbar, um z.B. die Batterien des Elektrofahrzeugs über eine (nicht gezeigte) Ladestation aufzuladen.

Neben den beispielhaften Gebäuden 16.1, 16.2 ist an dem Niederspannungsnetz 14.1 vorliegend ein Energieerzeuger 22 in Form einer Windkraftanlage 22 angeschlossen. Es versteht sich, dass eine Mehrzahl an Windkraftanlagen in Form eines Windparks angeschlossen sein kann sowie andere Arten von Energieerzeugern. Abhängig von der Summenleistung der Erzeuger (z. B. eines Windparks) können diese auch auf anderen Netzebenen 8, 10, 12 angeschlossen sein.

Ferner weist das zweite Niederspannungsnetz 14.2 ein Solarkraftwerk 24 auf, welches eingerichtet ist, elektrische Energie in das Niederspannungsnetz 14.2 einzuspeisen. Schließlich sind beispielhaft elektrische Verbraucher in Form von Kühlanlagen 26 und Wärmeanlagen 28 an dem Niederspannungsnetz 14.2 angeschlossen. Diese können insbesondere einen hohen elektrischen Bedarf haben. Andere beispielhaft genannte elektrische Verbraucher sind Klimaanlagen, Wärmepumpen, Nachtspeicherheizungen, Batterien im Haushalt und elektrisch beheizbare Pufferspeicher, die jeweils mit zumindest einer Zusatzeinrichtung ausgestattet sein können.

Wie zu erkennen ist, weisen die Einrichtungen/Anlagen 18, 20, 26, 27 und 28 jeweils eine Zuschaltvorrichtung 30 auf. Die Zuschaltvorrichtungen 30 der Einrichtungen 20, 26 und 28 sind von einer zentralen Steuerung 36 ansteuerbar. Hierzu sind Steuersignaleingänge 32 vorgesehen, welche eine Ankopplung an ein Kommunikationsnetz 34, wie das Internet, ein Mobilfunknetz, etc., ermöglichen. Es versteht sich, dass alternativ oder zusätzlich zu der Zuschaltvorrichtungen 30 des Elektrofahrzeugs 27 auch die Ladestation über eine Zuschaltvorrichtungen verfügen kann.

Die Zuschaltvorrichtung 30 ist insbesondere eingerichtet, ein Anfahren/Hochfahren der verschiedenen Verbraucher und/oder Erzeuger 18 bis 20, 26 und 28 nach Empfang eines Steuersignals z.B. von der zentralen Steuerung 36 zu regeln. Die Funktionsweise der Zuschaltvorrichtung 30 und deren Aufbau werden nachfolgend näher beschrieben.

Figur 2 zeigt ein weiteres beispielhaftes System gemäß der vorliegenden Erfindung. Insbesondere zeigt die Figur 2 eine detailliertere Darstellung des ersten Gebäudes 16.1 aus Figur 1. Das Gebäude 16.1 umfasst insbesondere ein Hausautomationssystem 18.

Das Hausautomationssystem 18 umfasst vorliegend eine zentrale Hausautomationssteuerung 38. Die Hausautomationssteuerung 38 ist dazu eingerichtet, elektrische Verbraucher, 44, 46, wie elektrisch betriebene Rollläden 44 oder Beleuchtungseinrichtungen 46, zu steuern. Es versteht sich, dass weitere Verbraucher durch die Hausautomationssteuerung 38 gesteuert werden können. Hierzu sind die elektrischen Verbraucher 44, 46 über eine drahtgebundene und/oder drahtlose Kommunikationsverbindung mit der Hausautomationssteuerung 38 verbunden.

Die Hausautomationssteuerung 38 kann zudem über eine Kommunikationsverbindung 48 mit einer übergeordneten Steuerung, wie einem Server, verbunden sein. Beispielsweise kann der Server der Hausautomationssteuerung 38 Daten über bestimmte Ereignisse, wie Sonnenuntergangszeit und Sonnenaufgangszeit und dergleichen, zur Verfügung stellen.

Zum Ansteuern und Verarbeiten von Daten weist die Hausautomationssteuerung 38 eine zentrale Steuerung 40 auf, welche Steuersignale erzeugen und an die Verbraucher 44, 46 senden kann. In herkömmlicher Weise können Prozessormittel, Speichermittel, etc., vorgesehen sein. Hierdurch kann beispielsweise ein Elektromotor der Rollläden 44 angesteuert, also aktiviert, werden, um die Rollläden 44 runter oder hoch zu fahren.

Vorliegend weist die Hausautomationssteuerung 38 ferner eine Zuschaltvorrichtung 30 auf. Diese Zuschaltvorrichtung 30 ist einem Verbraucher, im vorliegenden Beispiel den elektrisch betriebenen Rollläden 44, zugeordnet. Die Zuschaltvorrichtung 30 empfängt über einen Steuersignaleingang 42 ein Steuersignal, wie ein Zuschaltbefehl für den Verbraucher 44, zum Hoch- oder Runterfahren der Rollläden 44, von der Steuerung 40. Wie nachfolgend näher beschrieben wird, ist die Zuschaltvorrichtung 30 dazu eingerichtet, die Zuschaltung des elektrischen Verbrauchers 44 um eine zufallsbedingte Zuschaltverzögerungszeitspanne nach Empfang des Zuschaltbefehls zu verzögern. Beispielsweise kann die Zuschaltvorrichtung 30 zwischen dem Verbraucher 44 und der Steuerung 40 angeordnet und eingerichtet sein, den Zuschaltbefehl erst nach Ablauf der Zuschaltverzögerungszeitspanne weiterzuleiten. Alternativ kann der Zuschaltbefehl von der Steuerung 40 sowohl an die Zuschaltvorrichtung 30 als auch an den Verbraucher 44 gesendet werden. In diesem Fall sperrt die Zuschaltvorrichtung 30 jedoch die Zuschaltung des Verbrauchers 44 bis zum Ablauf der Zuschaltverzögerungszeitspanne. Beispielsweise kann die Sperrung durch Übermitteln eines Freigabesignals aufgehoben werden.

Es versteht sich, dass eine Zuschaltvorrichtung mehreren elektrischen Verbrauchern zugeordnet sein kann oder eine Mehrzahl von Zuschaltvorrichtungen, beispielsweise pro Verbraucher genau eine Zuschaltvorrichtung, vorgesehen sein kann. Es versteht sich ferner, dass Zuschaltvorrichtung 30 und Steuerung 40 auf einer gemeinsamen Hardwareplattform als Softwaremodule realisiert sein können, welche beispielsweise über logische Kanäle Daten miteinander austauschen können und/oder auf getrennten Hardwarekomponenten, z.B. mittels eines BUS, Daten austauschen können. So kann die Zuschaltvorrichtung 30 und Steuerung 40 auch je Verbraucher unterschiedlich ausgebildet sein. Auch kann es mehrere Hausautomatisierungssysteme 18 in einem Gebäude geben, die alle den Beginn des Energieaustausches mit einem Netz, für die dem System zugeordneten Verbraucher/Anlagen/Geräte, nach Erreichen einer Zuschaltbedingung zufallsbedingt zeitlich verzögern können.

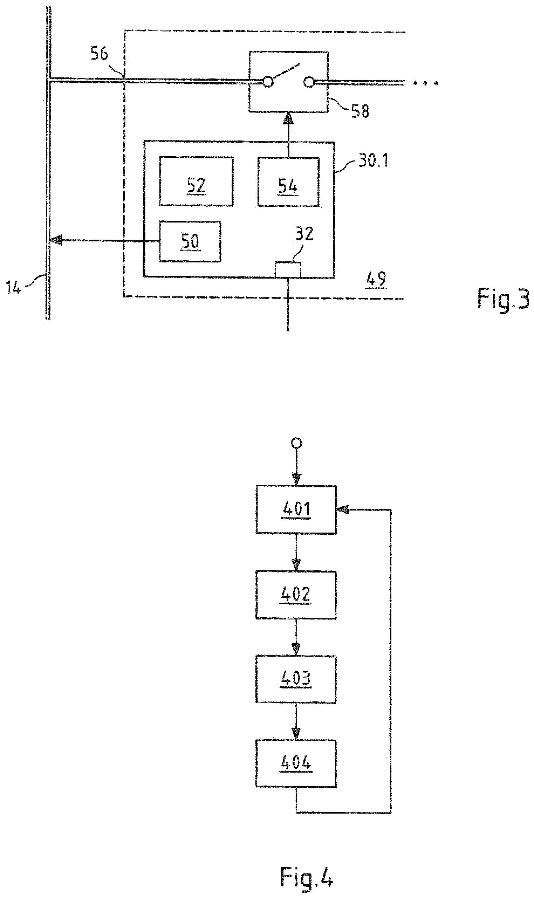

Die Figur 3 zeigt ein Ausführungsbeispiel der Zuschaltvorrichtung 30.1 gemäß der vorliegenden Erfindung. In dem dargestellten Ausführungsbeispiel ist die Zuschaltvorrichtung 30.1 in einer elektrischen Anlage 49 integriert. Beispielsweise kann die Zuschaltvorrichtung 30.1 ein Hardwaremodul mit einem Prozessor, Speichermittel, etc. sein. Auch kann die Zuschaltvorrichtung 30.1 ein Softwaremodul, wie ein Softwareagent, sein. In diesem Fall kann vorteilhafterweise die Hardware, wie ein Controller, der elektrischen Anlage 49, wie einer Hausautomationssteuerung, einer Steuerung einer Kühl- oder Wärmeanlage, einer Batterieladesteuerung oder dergleichen, zur Ausführung des Softwareagenten genutzt werden. Es versteht sich, dass die Zuschaltvorrichtung 30.1 aus Hard- und Softwaremodulen gebildet sein kann.

Die elektrische Anlage 49 ist über einen Stromanschluss 56 und eine Schalteinrichtung 58, die den Stromfluss beispielsweise über mindestens einen Schalter, mindestens einen gesteuerten Halbleiter und/oder mindestens einen regelbaren Widerstand steuert, mit dem Stromversorgungsnetz 14 verbunden.

Wie der Figur 3 zu entnehmen ist, weist die Zuschaltvorrichtung 30.1 neben dem Steuersignaleingang 32 eine Ansteuereinrichtung 54, eine Zuschaltverzögerungseinrichtung 52 und eine Erfassungseinrichtung 50 auf. Die Erfassungseinrichtung 50 ist dazu eingerichtet, mindestens einen (lokalen) Netzparameter des Stromversorgungsnetzes 14, wie die Netzspannung, die Netzfrequenz und/oder den Netzstrom, zu erfassen. Beispielsweise kann an einer Leitung des Stromversorgungsnetzes 14 mindestens ein entsprechender Messfühler angeordnet sein. Es versteht sich, dass der Netzparameter an einer beliebigen Stelle, beispielsweise an dem Stromanschluss 56 der elektrischen Anlage 49, gemessen werden kann.

Die Ansteuereinrichtung 54 ist dazu eingerichtet, den Schalter 58 anzusteuern, um hierdurch ein Schließen des Schalters, also das Zustandekommen eines Stromflusses zwischen elektrischer Anlage 49 und Stromversorgungsnetz 14, zu bewirken.

Mittels der Figur 4 wird nachfolgend die Funktionsweise eines Ausführungsbeispiels eines Systems gemäß der vorliegenden Erfindung näher beschrieben. Die Figur 4 zeigt ein Ausführungsbeispiel eines Verfahrens gemäß der vorliegenden Erfindung.

Insbesondere nach einer Trennung einer elektrischen Anlage, wie zum Beispiel einem Verbraucher eines Hausautomationssystems 18 oder einer Kühl- oder Wärmeanlage 26, 28, von dem Stromversorgungsnetz 14 überwacht die der elektrischen Anlage zugeordnete Zuschaltvorrichtung 30 den (eigenen) Steuersignaleingang 32 in Schritt 401. Wie bereits beschrieben, kann der Steuersignaleingang 32 ein logischer und/oder ein physischer Eingang sein. Es versteht sich ferner, dass in einer Ausführungsform der Eingang zusätzlich auch als Ausgang verwendet werden kann.

Empfängt oder detektiert die Zuschaltvorrichtung 30 einen Zuschaltbefehl, so bestimmt sie im nächsten Schritt 402 die zufallsbedingte Zuschaltverzögerungszeitspanne. Es versteht sich, dass die Schritte 401 und 402 auch parallel oder in einer anderen Reihenfolge durchgeführt werden können.

Der Zuschaltbefehl kann beispielsweise ein zentrales Broadcastsignal sein, welches von der zentralen Steuerung 36 an eine Vielzahl von elektrischen Verbrauchern 26, 28 gleichzeitig gesendet wird, um diese zu aktiveren, also dem Stromversorgungsnetz 14 zu zuschalten. Der Hintergrund der Aussendung des zentralen Steuersignals kann beispielsweise sein, dass der Strompreis aufgrund einer hohen im Stromversorgungsnetz eingespeisten Energiemenge (aktuell) niedrig ist. Wie eingangs ausgeführt, führt ein solches zentrales Steuersignal umfassend zumindest einen Zuschaltbefehl für eine Vielzahl von elektrischen Verbrauchern 26, 28 zu einer nahezu gleichzeitigen Zuschaltung einer hohen Last. Es ist erkannt worden, dass die damit verbundenen Stabilitäts-, Überlastungs- bzw. Spannungsprobleme vermieden werden können, indem die Mehrzahl an Verbrauchern 26, 28 zeitversetzt zugeschaltet werden. Insbesondere bei systemimmanenten Verbrauchern, wie bei Wärme- oder Kälteanlagen 26, 28, kommt es zudem nicht auf eine Energiezufuhr zu einem bestimmten Zeitpunkt an, wie es beispielsweise bei der Aktivierung einer Beleuchtung durch Drücken eines Schalters ist.

Ein weiteres Beispiel eines Zuschaltbefehls ist ein Steuersignal einer Hausautomationssteuerung 38 beispielsweise zum Schließen/Öffnen von Rollläden 44 basierend auf einem vorgegebenen Ereignis, wie dem Zeitpunkt des Sonnenaufgangs bzw. -untergangs. Diese Art von Ereignissen können die Generierung und Übermittlung eines Zuschaltbefehls auslösen. In der Vergangenheit konnte das bei einer Vielzahl von Hausautomationssystemen in einem lokal begrenzten Gebiet zu den oben beschriebenen Netzproblemen führen. Beispielsweise kann dies zumindest in einem lokalen Gebiet dazu führen, dass eine Vielzahl von Rollläden, insbesondere dessen elektrische Antriebe, nahezu zeitgleich, mit dem Stromversorgungsnetz 14 verbunden werden. Auch hier ist erkannt worden, dass die damit verbundenen Stabilitäts-, Überlastungs- bzw. Spannungsprobleme vermieden werden können, wenn die Mehrzahl von Verbrauchern zeitversetzt zugeschaltet werden.

Ein noch weiteres Beispiel eines Zuschaltbefehls ist ein Steuersignal einer Heizungssteuerung beispielsweise zum Nachladen von Nachtspeicherheizungen basierend auf einem vorgegebenen Ereignis, wie der Bekanntgabe eines geringen Strompreises. Diese Art von Ereignissen können die Generierung und Übermittlung eines Zuschaltbefehls auslösen. Beispielsweise kann dies zumindest in einem lokalen Gebiet dazu führen, dass eine Vielzahl von elektrischen Anlagen 49, nahezu zeitgleich, mit dem Stromversorgungsnetz 14 verbunden werden. Auch hier ist erkannt worden, dass die damit verbundenen Stabilitäts-, Überlastungs- bzw. Spannungsprobleme vermieden werden können, wenn die Mehrzahl von Verbrauchern zeitversetzt zugeschaltet werden.

In Schritt 402 wird von der Zuschaltverzögerungseinrichtung 52 der Zuschaltvorrichtung 30 eine zufallsbedingte Zuschaltverzögerungszeitspanne bestimmt. In einem Fall kann nach dem Empfang des Zuschaltbefehls mittels eines Zufallsgenerators eine zufallsbedingte Zuschaltverzögerungszeitspanne bzw. Wartezeit in einem vorgegebenen Zeitbereich, beispielsweise 10 Minuten, bestimmt werden. Der Zeitbereich kann werkseitig beispielsweise von dem Hersteller des Verbrauchers vorgegeben sein.

In einer Ausführungsform kann vorgesehen sein, dass der Zeitbereich nicht (fest) vorgegeben ist, sondern ebenfalls zunächst von der Zuschaltverzögerungseinrichtung 52 in Schritt 402 bestimmt wird. Beispielsweise kann dies stets nach Empfang eines Zuschaltbefehls erfolgen oder einmalig bei der Installation oder Empfang des ersten Zuschaltbefehls. Im zuletzt genannten Fall kann der bestimmte Zeitbereich für nachfolgende Zuschaltvorgänge abgespeichert werden.

Nach Bestimmung der Zuschaltverzögerungszeitspanne wird die Zuschaltung der elektrischen Anlage, wie einer Kälteanlage 26, Wärmeanlage 28, Rollläden 44, etc., um diese Zuschaltverzögerungszeitspanne verzögert. Dann kann in Schritt 403 die Zuschaltvorrichtung 30, beispielsweise mittels der Ansteuereinrichtung 54, die Zuschaltung bewirken.

Nach dem Empfang eines Abschaltsignals beispielsweise von einer zentralen Steuerung 36, 40 kann dann die elektrische Anlage 20, 26, 28, 44 wieder vom Stromversorgungsnetz 14 getrennt werden (Schritt 404). Das Verfahren wird dann in Schritt 401 fortgesetzt.

Nachfolgend wird ein bevorzugtes Ausführungsbeispiel zur Bestimmung des Zeitbereichs und der Zuschaltverzögerungszeitspanne beschrieben. Vorzugsweise können Zeitbereich und Zuschaltverzögerungszeitspanne berechnet werden.

In die Berechnung des Zeitbereichs, also beispielswiese des maximalen Zeitraums, um den die Zuschaltung verzögert werden kann, sowie in die Berechnung der zufälligen Zuschaltverzögerungszeitspanne bzw. Wartezeit selber können eine oder mehrere der folgenden Eingangsgrößen einfließen:

- vom Hersteller bei der Produktion des elektrischen Verbrauchers/Anlage/Geräts festgelegte Identifikationskennung in Form einer Zahl, beispielsweise eine Seriennummer (im Bereich von z. B. 0 ... 100),
- die Nennleistung des/der Verbrauchers/Anlage/Geräts,
- physikalische Größen, die am Ort der Last gemessen werden, insbesondere Netzparameter, wie Netzspannung, Netzfrequenz, sowie Umgebungstemperaturen, wie am Ort der Last gemessene Temperatur oder Zeit,
- ein gemessener Zeitpunkt oder ein Zeitraum.

In einer Ausführungsform des vorliegenden Verfahrens kann der Zeitbereich und/oder die maximale Zuschaltverzögerungszeitspanne auf der Basis einer physikalischen Größe bestimmt werden, die lokal erfasst wurde. Beispielsweise kann mittels einer Erfassungseinrichtung 50 die Netzfrequenz und/oder die Netzspannung am Ort der Last gemessen werden. Basierend auf dem gemessenen Wert kann die Zuschaltvorrichtung, beispielsweise nach der Vorschrift, je geringer die Netzfrequenz und/oder die Netzspannung ist/sind, umso größer ist der Zeitbereich, den Zeitbereich bestimmen. Mit anderen Worten ist in diesem Fall die maximale Zuschaltverzögerungszeitspanne umso kleiner, je höher z. B. die Netzfrequenz und/oder die Netzspannung ist.

Beispielsweise kann der Zeitbereich wie folgt bestimmt werden:

- für eine gemessene Niederspannungen von 400 bis 440 V beträgt der Zeitbereich einen festen Wert, wie 10 Minuten;
- für gemessene Niederspannungen von 360 bis 400 V ist der Zeitbereich der feste Wert (z.B. 10 Minuten) plus (die gemessene verkettete Spannung bis 360 V)*0,5 Min/V.

Innerhalb des zuvor festgelegten Zeitbereichs (oder auch eines werkseitig festgelegten Zeitbereichs) kann vorzugsweise zunächst zur Bestimmung der zufallsbedingten Zuschaltverzögerungszeitspanne eine große natürliche Zahl (z. B. > 10 Stellen) aus einer Ausgangszahl durch Rechenoperationen von der Zuschaltvorrichtung berechnet werden. Dann wird eine vorgebbare Anzahl von Stellen von dieser Zahl abgeschnitten und verworfen. So kann diese Zahl durch Rechenoperatoren soweit verkleinert werden, bis sich eine reelle Zahl im vorgegebenen oder zuvor bestimmten Zeitbereich ergibt. Diese Zahl wird als Zuschaltverzögerungszeitspanne beispielweise in Minuten bis zur (Wieder)Zuschaltung von der Last/dem Verbraucher/Gerät interpretiert und nach Erhalt des Zuschaltbefehls zur Wiederzuschaltung abgewartet.

In einer Ausführungsform des Verfahrens kann die zufallsbedingte Zuschaltverzögerungszeitspanne beispielsweise wie folgt bestimmt werden: Die Ausgangszahl entspricht den letzten drei Ziffern der Seriennummer des Verbrauchers/Gerätes. Hierdurch kann erreicht werden, dass eine individuelle Zuschaltverzögerungszeitspanne für jeden/s Verbraucher/Gerät individuell bestimmt werden kann. Die Wahrscheinlichkeit, dass gleichartige Verbraucher zu unterschiedlichen Zeiten eingeschaltet werden, kann erhöht werden. Als nächstes kann die aktuelle Netzspannung (U) als Leiter-Erde-Spannung in Volt auf z.B. 2 Stellen hinter dem Komma genau gemessen werden.

Dann kann basierend auf folgender Rechenvorschrift eine große Zahl Z bestimmt werden:

$$Z = U^{[(Ausgangszahl+a)/b]}, \qquad\qquad (a)$$

wobei a und b vorgebbare Konstanten, wie a=50 und b=5 sind.

In einem nächsten Rechenschritt kann eine vorgebebene Anzahl von Stellen (z.B. 3) von der großen Zahl Z abgeschnitten werden. Die resultierende Zahl $Z_{res}$ kann in einem vorgegebenen Format dargestellt werden. Ein bevorzugtes Format ist das Folgende:

$$Z_{res} = x, y \cdot 10^z \qquad\qquad (b)$$

In einem nächsten Schritt kann die resultierende Zahl $Z_{res}$ durch eine vorgebbare Zahl, vorliegend bevorzugt $10^z$, dividiert werden. Das Ergebnis x, y kann dann als Zuschaltverzögerungszeitspanne in
Minuten interpretiert werden. Mit anderen Worten kann bei einem Zeitbereich für die Zuschaltverzögerungszeitspanne von 0 bis 10 Minuten die erste Ziffer der Zahl $Z_{res}$ als Wartezeit in Minuten und die nachfolgenden Stellen als Wartezeit in Sekunden interpretiert werden.

Die Nachkommastellen, die als Sekunden interpretiert werden, können auf eine geeignete Anzahl von Stellen (z.B. zwei) gerundet werden. Eine bei dieser Vorgehensweise maximale Überschreitung der (10-minütigen) maximalen Zuschaltverzögerungszeitspanne $ZV_{max}$ um 40 Sekunden ist dabei möglich und akzeptabel. Alternativ können die Nachkommastellen von $Z_{res}/10^z$ durch 2 dividiert als Sekunden interpretiert werden.

Wenn der Zeitbereich für die Zuschaltverzögerungszeitspanne kleiner als 10 Minuten ist und die erste Ziffer von $Z_{res}$ als Zahl kleiner als die um 1 Minute verminderte maximale Zuschaltverzögerungszeitspanne ist, kann die zufällige Zuschaltverzögerungszeitspanne ebenfalls durch $Z_{res}/10^z$ berechnet werden.

Wenn der Zeitbereich für die Zuschaltverzögerungszeitspanne größer als 10 Minuten ist und die Zahl aus den ersten beiden Ziffern von $Z_{res}$ kleiner als die um 1 Minute verminderte maximale Zuschaltverzögerungszeitspanne ist, wird die zufällige Zuschaltverzögerungszeitspanne durch $Z_{res}/10^{(z-1)}$ berechnet. Im anderen
Fall wird $Z_{res}/(10^{(z-1)})*(ZV_{max}/99)$ berechnet und das Ergebnis als Zuschaltverzögerungszeitspanne in Minuten mit den Nachkommastellen als Sekunden interpretiert.

Durch die erfindungsgemäße Zuschaltvorrichtung kann ein zentraler Zuschaltbefehl dezentral für (jede) elektrische Anlage individuell verzögert und so die Gefahr eines Schwarzfalls reduziert werden.

**Patentansprüche**

1. Zuschaltvorrichtung (30) für mindestens eine mit einem Stromversorgungsnetz (8, 10, 12, 14, 14.1, 14.2) elektrisch verbindbare Anlage (20, 26, 27, 28, 44, 49), umfassend:

   - mindestens eine Zuschaltverzögerungseinrichtung (52) eingerichtet zum Bestimmen einer Zuschaltverzögerungszeitspanne,
   - wobei die Zuschaltvorrichtung (30) eingerichtet ist, ein Herstellen einer elektrisch leitenden Verbindung zwischen der Anlage (20, 26, 27, 28, 44, 49) und dem Stromversorgungsnetz (8, 10, 12, 14, 14.1, 14.2) bei Empfang des Zuschaltbefehls erst nach Ablauf der bestimmten Zuschaltverzögerungszeitspanne zu bewirken, **dadurch gekennzeichnet, dass**
   - die Zuschaltvorrichtung (30) mindestens einen Steuersignaleingang (32) zum Empfangen eines Steuersignals von einer entfernt angeordneten zentralen Steuerung (36, 40), wobei das Steuersignal zumindest ein Zuschaltbefehl ist,
   - die Zuschaltverzögerungszeitspanne eine zufallsbedingte und anlagenindividuelle Zeitspanne ist.

2. Zuschaltvorrichtung (30) nach Anspruch 1, **dadurch gekennzeichnet, dass** die Zuschaltverzögerungseinrichtung (52) eingerichtet ist, die Zuschaltverzögerungszeitspanne in Abhängigkeit einer Identifikationskennung der Anlage (20, 26, 27, 28, 44, 49) zu bestimmen.

3. Zuschaltvorrichtung (30) nach Anspruch 1 oder 2, **dadurch gekennzeichnet, dass**

   - die Zuschaltverzögerungszeitspanne innerhalb eines Zeitbereichs liegt, und
   - die Zuschaltverzögerungseinrichtung (52) eingerichtet ist, den Zeitbereich zu bestimmen.

4. Zuschaltvorrichtung (30) nach Anspruch 3, **dadurch gekennzeichnet, dass** die Zuschaltverzögerungseinrichtung (52) eingerichtet ist, den Zeitbereich in Abhängigkeit von mindestens einem Parameter ausgewählt aus der Gruppe umfassend:

   - Identifikationskennung der Anlage (20, 26, 27, 28, 44, 49),
   - Nennleistung der Anlage (20, 26, 27, 28, 44, 49),
   - regelbare Anlage oder nicht regelbare Anlage (20, 26, 27, 28, 44, 49),
   - historische Daten der Anlage (20, 26, 27, 28, 44, 49),
   - mindestens ein lokal erfasster Netzparameter des Stromversorgungsnetzes (8, 10, 12, 14, 14.1, 14.2),
   - lokale Zeit,
   - lokale Temperatur,
   - Zeitdauer der Abschaltung der Anlage (20, 26, 27, 28, 44, 49),
   - Zeitpunkt der Abschaltung der Anlage (20, 26, 28, 27, 44, 49),

   zu bestimmen.

5. Zuschaltvorrichtung (30) nach Anspruch 4, **dadurch gekennzeichnet, dass**

   - die Zuschaltverzögerungseinrichtung (52) eingerichtet ist, einen gemessenen Netzparameter mit einem vorgegebenen Netzparameter zu vergleichen, und
   - die Zuschaltverzögerungseinrichtung (52) eingerichtet ist, in Abhängigkeit des Vergleichsergebnisses den Zeitbereich zu bestimmen.

6. Zuschaltvorrichtung (30) nach einem der vorhergehenden Ansprüche, **dadurch gekennzeichnet, dass** die Zuschaltverzögerungseinrichtung (52) eingerichtet ist, die Zuschaltverzögerungszeitspanne in Abhängigkeit von mindestens einem Parameter ausgewählt aus der Gruppe umfassend:

   - Identifikationskennung der Anlage (20, 26, 28, 44, 49),
   - Nennleistung der Anlage (20, 26, 27, 28, 44, 49),
   - regelbare Anlage oder nicht regelbare Anlage (20, 26, 27, 28, 44, 49),
   - historische Daten der Anlage (20, 26, 27, 28, 44, 49),
   - mindestens ein lokal erfasster Netzparameter des Stromversorgungsnetzes (8, 10, 12, 14, 14.1, 14.2),
   - lokale Zeit,

- lokale Temperatur,
- Zeitdauer der Abschaltung der Anlage (20, 26, 27, 28, 44, 49),
- Zeitpunkt der Abschaltung der Anlage (20, 26, 27, 28, 44, 49),

zu bestimmen.

**7.** Elektrische Anlage (20, 26, 27, 28, 44, 49) umfassend eine Zuschaltvorrichtung (30) nach einem der vorhergehenden Ansprüche 1 bis 6.

**8.** System (2), umfassend:

- mindestens eine mit einem Stromversorgungsnetz (8, 10, 12, 14, 14.1, 14.2) elektrisch verbindbare Anlage (20, 26, 27, 28, 44, 49),
- mindestens eine der Anlage (20, 26, 27, 28, 44, 49) zugeordnete Zuschaltvorrichtung (30) nach einem der vorherigen Ansprüche 1 bis 6, und
- mindestens eine mit der Zuschaltvorrichtung (30) über eine Kommunikationsverbindung (34) verbundene und entfernt angeordnete zentrale Steuerung (36, 40).

**9.** System (2) nach Anspruch 8, **dadurch gekennzeichnet, dass**

- die zentrale Steuerung (40) zumindest Teil einer Hausautomationssteuerung (38) ist, und
- die Hausautomationssteuerung (38) die Zuschaltvorrichtung (40) insbesondere umfasst.

**10.** Verfahren zum elektrischen Verbinden einer Anlage (8, 10, 12, 14, 14.1, 14.2) mit einem Stromversorgungsnetz (20, 26, 27, 28, 44, 49), umfassend:

- Empfangen eines Steuersignals von einer entfernt angeordneten zentralen Steuerung (36, 40), wobei das Steuersignal ein Zuschaltbefehl ist,
- Bestimmen einer Zuschaltverzögerungszeitspanne, wobei die Zuschaltverzögerungszeitspanne eine zufallsbedingte und anlagenindividuelle Zeitspanne ist, und
- bei Empfang des Zuschaltbefehls, Herstellen einer elektrisch leitenden Verbindung zwischen der Anlage (20, 26, 27, 28, 44, 49) und dem Stromversorgungsnetz (8, 10, 12, 14, 14.1, 14.2) erst nach Ablauf der Zuschaltverzögerungszeitspanne.

**11.** Computerprogramm mit Instruktionen ausführbar auf einem Prozessor derart, dass eine Anlage, insbesondere ein elektrischer Verbraucher, gemäß dem Verfahren nach Anspruch 10 nach Empfang eines Zuschaltbefehls zu dem Stromversorgungsnetz zugeschaltet wird.

**Claims**

**1.** Switch-on device (30) for at least one device (20, 26, 27, 28, 44, 49) which can be electrically connected to a power supply network (8, 10, 12, 14, 14.1, 14.2), comprising:

- at least one switch-on delay unit (52) configured to determine a switch-on delay time period,
- wherein the switch-on device (30) is configured to establish an electrically conductive connection between the device (20, 26, 27, 28, 44, 49) and the power supply network (8, 10, 12, 14, 14.1, 14.2) upon receipt of an activation command only after expiry of the determined switch-on delay time period, **characterized in that**
- the switch-on device (30) comprises at least one control signal input (32) for receiving a control signal from a remote central controller (36, 40), wherein the control signal is at least one switch-on command,
- wherein the switch-on delay time period is a random and device-individual time period.

**2.** Switch-on device (30) according to claim 1, **characterized in that** the switch-on delay unit (52) is configured to determine the switch-on delay time period in dependence of an identification identifier of the device (20, 26, 27, 28, 44, 49).

**3.** Switch-on device (30) according to claim 1 or 2, **characterized in that**

- the switch-on delay time period is within a time range, and
- the switch-on delay unit (52) is configured to determine the time range.

4. Switch-on device (30) according to claim 3, **characterized in that** the switch-on delay unit (52) is configured to determine the time range in dependence on at least one parameter selected from the group comprising:

- identification identifier of the device (20, 26, 27, 28, 44, 49),
- rated power of the device (20, 26, 27, 28, 44, 49),
- adjustable system or non-adjustable device (20, 26, 27, 28, 44, 49),
- historical data of the device (20, 26, 27, 28, 44, 49),
- at least one locally detected network parameter of the power supply network (8, 10, 12,14, 14.1, 14.2),
- local time,
- local temperature,
- duration of shutdown of the device (20, 26, 27, 28, 44, 49),
- time point of shutdown of the device (20, 26, 28, 27, 44, 49).

5. Switch-on device (30) according to claim 4, **characterized in that**

- the switch-on delay unit (52) is configured to compare a measured network parameter with a predetermined network parameter, and
- the switch-on delay unit (52) is configured to determine the time range depending on the comparison result.

6. Switch-on device (30) according to any one of the preceding claims, **characterized in that** the switch-on delay unit (52) is configured to determine the switch-on delay time period depending on at least one parameter selected from the group comprising:

- identification identifier of the device (20, 26, 27, 28, 44, 49),
- rated power of the device (20, 26, 27, 28, 44, 49),
- adjustable system or non-adjustable device (20, 26, 27, 28, 44, 49),
- historical data of the device (20, 26, 27, 28, 44, 49),
- at least one locally detected network parameter of the power supply network (8, 10, 12, 14, 14.1, 14.2),
- local time,
- local temperature,
- duration of shutdown of the device (20, 26, 27, 28, 44, 49),
- time point of shutdown of the device (20, 26, 28, 27, 44, 49).

7. Electrical device (20, 26, 27, 28, 44, 49) comprising a switch-on device (30) according to one of the preceding claims 1 to 6.

8. System (2) comprising:

- at least one device (20, 26, 27, 28, 44, 49) electrically connectable with a power supply network (8, 10, 12, 14,14.1,14.2),
- at least one switch-on device (30) according to one of the preceding claims 1 to 6 and assigned to the device (20, 26, 27, 28, 44, 49), and
- at least one central controller (36, 40) connected with and remotely located from the switch-on device (30) via a communication link (34).

9. System (2) according to claim 8, **characterized in that**

- the central controller (40) is at least part of a home automation controller (38), and
- the home automation control (38), in particular, comprises the switch-on device (40).

10. A method for electrically connecting a device (8, 10, 12,14, 14.1, 14.2) to a power supply network (20, 26, 27, 28, 44, 49), comprising:

- receiving a control signal from a remote central controller (36, 40), wherein the control signal is a switch-on command,

- determining a switch-on delay time period, wherein the switch-on delay time period is a random and device-individual time period, and
- upon receipt of the switch-on command, establishing an electrically conductive connection between the device (20, 26, 27, 28, 44, 49) and the power supply network (8, 10, 12, 14, 14.1, 14.2) until after the expiry of the switch-on delay time period.

**11.** Computer program with instructions executable on a processor such that a device, in particular an electrical load, is switched-on to the power supply network according to the method of claim 10 after receiving a switch-on command.

**Revendications**

**1.** Dispositif de mise en marche (30) pour au moins une installation (20, 26, 27, 28, 44, 49) pouvant être raccordée électriquement à un réseau d'alimentation en courant électrique (8, 10, 12, 14, 14.1, 14.2), ladite installation comprenant :

- au moins un dispositif à retard de mise en marche (52) installé pour déterminer un laps de temps de retard de mise en marche, et
- selon lequel le dispositif de mise en marche (30) qui est installé pour déclencher à réception de l'instruction de mise en marche, seulement après écoulement du laps de temps de retard de mise en marche ayant été déterminé, l'établissement d'une liaison électroconductrice entre l'installation (20, 26, 27, 28, 44, 49) et le réseau d'alimentation en courant électrique (8, 10, 12, 14, 14.1, 14.2),
**caractérisé**
- **en ce que** le dispositif de mise en marche comprend au moins une entrée de signal de commande (32) servant à la réception d'un signal de commande provenant d'une commande centrale (36, 40) disposée à distance, où le signal de commande est au moins une instruction de mise en marche,
- **en ce que** le laps de temps de retard de mise en marche est un laps de temps aléatoire et individuel inhérent à l'installation.

**2.** Dispositif de mise en marche (30) selon la revendication 1, **caractérisé en ce que** le dispositif à retard de mise en marche (52) est installé pour déterminer le laps de temps de retard de mise en marche, en fonction d'un code d'identification de l'installation (20, 26, 27, 28, 44, 49).

**3.** Dispositif de mise en marche (30) selon la revendication 1 ou 2, **caractérisé**

- **en ce que** le laps de temps de retard de mise en marche se situe à l'intérieur d'une plage de temps, et
- **en ce que** le dispositif à retard de mise en marche (52) est installé pour déterminer la plage de temps.

**4.** Dispositif de mise en marche (30) selon la revendication 3, **caractérisé en ce que** le dispositif à retard de mise en marche (52) est installé pour déterminer la plage de temps, en fonction d'au moins un paramètre sélectionné parmi le groupe comprenant :

- le code d'identification de l'installation (20, 26, 27, 28, 44, 49),
- la puissance nominale de l'installation (20, 26, 27, 28, 44, 49),
- l'installation réglable ou l'installation non réglable (20, 26, 27, 28, 44, 49),
- des données historiques de l'installation (20, 26, 27, 28, 44, 49),
- au moins un paramètre du réseau d'alimentation en courant électrique (8, 10, 12, 14, 14.1, 14.2), ledit paramètre étant détecté localement,
- le temps local,
- la température locale,
- la durée de la coupure de l'installation (20, 26, 27, 28, 44, 49),
- le moment de la coupure de l'installation (20, 26, 28, 27, 44, 49).

**5.** Dispositif de mise en marche (30) selon la revendication 4, **caractérisé**

- **en ce que** le dispositif à retard de mise en marche (52) est installé pour comparer un paramètre de réseau mesuré, à un paramètre de réseau prédéfini, et
- **en ce que** le dispositif à retard de mise en marche (52) est installé pour déterminer la plage de temps, en fonction du résultat de la comparaison.

6. Dispositif de mise en marche (30) selon l'une quelconque des revendications précédentes, **caractérisé en ce que** le dispositif à retard de mise en marche (52) est installé pour déterminer le laps de temps de retard de mise en marche, en fonction d'au moins un paramètre sélectionné parmi le groupe comprenant :

   - le code d'identification de l'installation (20, 26, 28, 44, 49),
   - la puissance nominale de l'installation (20, 26, 27, 28, 44, 49),
   - l'installation réglable ou l'installation non réglable (20, 26, 27, 28, 44, 49),
   - des données historiques de l'installation (20, 26, 27, 28, 44, 49),
   - au moins un paramètre du réseau d'alimentation en courant électrique (8, 10, 12, 14,14.1, 14.2), ledit paramètre étant détecté localement,
   - le temps local,
   - la température locale,
   - la durée de la coupure de l'installation (20, 26, 27, 28, 44,49),
   - le moment de la coupure de l'installation (20, 26, 27, 28, 44, 49).

7. Installation électrique (20, 26, 27, 28, 44, 49) comprenant un dispositif de mise en marche (30) selon l'une quelconque des revendications précédentes 1 à 6.

8. Système (2) comprenant :

   - au moins une installation (20, 26, 27, 28, 44, 49) pouvant être raccordée électriquement à un réseau d'alimentation en courant électrique (8, 10, 12, 14, 14.1,14.2),
   - au moins un dispositif de mise en marche (30) associé à l'installation (20, 26, 27, 28, 44, 49) selon l'une quelconque des revendications précédentes 1 à 6, et
   - au moins une commande centrale (36, 40) connectée au dispositif de mise en marche (30) par une liaison de communication (34) et disposée à distance.

9. Système (2) selon la revendication 8, **caractérisé**

   - **en ce que** la commande centrale (40) fait au moins partie d'une commande (38) du système domotique, et
   - **en ce que** la commande (38) du système domotique comprend en particulier le dispositif de mise en marche (30).

10. Procédé de raccordement électrique d'une installation (8, 10, 12, 14, 14.1, 14.2) à un réseau d'alimentation en courant électrique (20, 26, 27, 28, 44, 49), ledit procédé consistant :

    - à recevoir un signal de commande provenant d'une commande centrale (36, 40) disposée à distance, où le signal de commande est une instruction de mise en marche,
    - à déterminer un laps de temps de retard de mise en marche, où le laps de temps de retard de mise en marche est un laps de temps aléatoire et individuel inhérent à l'installation, et
    - à établir à réception de l'instruction de mise en marche, seulement après écoulement du laps de temps de retard de mise en marche, une liaison électroconductrice entre l'installation (20, 26, 27, 28, 44, 49) et le réseau d'alimentation en courant électrique (8, 10, 12, 14, 14.1, 14.2).

11. Programme informatique comportant des instructions réalisables sur un processeur, de manière telle qu'une installation, en particulier un consommateur électrique, soit mis(e) en marche conformément au procédé selon la revendication 10, après réception d'une instruction de mise en marche fournie au réseau d'alimentation en courant électrique.

Fig.1

Fig.2

Fig.3

Fig.4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2012000538 A1